# EUROPEAN PATENT SPECIFICATION

(11) **EP 3 242 149 B1**
(45) Date of publication and mention of the grant of the patent: **05.06.2019**
(21) Application number: 14909574.7
(22) Date of filing: 30.12.2014
(51) Int. Cl.: G01W 1/14

(54) **SYSTEM FOR MEASURING RAIN AND SNOW**
SYSTEM ZUM MESSEN VON REGEN UND SCHNEE
SYSTÈME DE MESURE DE PRÉCIPITATION ET DE NEIGE

(43) Date of publication of application: 08.11.2017
(73) Proprietor: Universidad Cooperativa De Colombia, Bogotá (CO); Ramirez Arias, Jose Luis, Bogotá (CO)
(72) Inventor: RAMIREZ ARIAS, Jose Luis, Bogotá (CO)
(74) Representative: Carvajal y Urquijo, Isabel
(86) International application number: PCT/IB2014/067430
(87) International publication number: WO 2016/108073

(56) References cited:
- WO-A1-01/46653
- WO-A1-01/46653
- CN-A- 101 776 775
- CN-A- 101 776 775
- CN-A- 103 197 360
- CN-U- 202 126 510
- CN-U- 202 126 510
- DE-A1- 4 231 235
- DE-A1- 4 231 235
- FR-A1- 2 770 306
- SU-A1- 1 582 164
- US-A- 4 476 718
- US-A1- 2014 290 353

## Description

### TECHNOLOGICAL FIELD

The present invention relates to a system or device for measuring rain and snow, consisting in a module for collecting water and snow, a module for measuring the level and volume of fluid, a data processing module, a heating module for collecting snow, a housing, and a photovoltaic energy module.

The device for measuring rain and snow permits the determination of the levels of rainwater or of snow in a given geographical zone, being adapted to the particular conditions of the place whereat said measurement is made, such as the atmospheric pressure and the temperature; this is realized by virtue of the data processing module which, making use of artificial intelligence, is capable of adapting the functioning of the device for measuring rain and snow to the particular conditions of the zone. The device is autonomous from an energy point of view by virtue of the fact that it utilizes photovoltaic solar energy for the functioning thereof.

The device of the present invention may be utilized for measurements at different levels, from environmental applications to aeronautical applications, by virtue of the pressure provided thereby based on the principle of operation thereof.

### BACKGROUND OF THE INVENTION

In the present day the majority of devices for measuring rain, or pluviometers, utilize as operating principal the cumulative measurement of the quantity of water falling upon a rocker and, based upon the number of times that the rocker tips, the quantity of water having ingressed into the system is calculated; however, these types of application do not take into account phenomena such as evaporation and changes of temperature and pressure which may affect the instantaneous measurement and the historical record of the precipitation data.

For example, the patent described in the document US3229519 relates to a pluviometer comprising an open vessel for the collection of precipitation, having liquid in the interior, principally connected with said vessel to record the volume of the liquid therein contained, a generally horizontal body of said vessel is principally immersed in said liquid, for rotation thereof upon a substantially horizontal axis; in this manner the precipitation may be communicated with the interior of said vessel, the internal body of the liquid and the surface level of same.

The foregoing system is solely valid for the measurement of substantial quantity of rain, said measurement being realized by counting the number of turns produced by the falling of liquid into the device; on realizing the measurement in this manner the precision is not high, by virtue of the fact that the minimum measurement corresponds to the quantity of water which the cylinder succeeds in ingressing within the oil, limiting the upper and lower level of the measurement in terms of the quantity of rain.

Additionally, the device is based upon considering that, firstly, the temperature of evaporation of the oil and, secondly, the surface tension of the oil are constant properties of same; nevertheless it is known in the state of the art that said properties change as a function of the temperature and the pressure, from which it may be deduced that the measurement would change as a function of the location of said device.

Additionally, the invention US4665743 reveals a pluviometer comprising a first vessel to receive the dry precipitation, a second vessel to receive the wet precipitation, provided with a first sensor capable of emitting a signal when a certain volume of sample of wet precipitation has been collected, a closing device permitting the alternate closure of the two vessels as a function of a signal emitted by a precipitation detector, a measuring device located in the outlet from the second vessel, utilized to undertake the measurements of the physicochemical quantities of the sample, a sampling device located in an outlet of the measuring device, used to dispose and maintain a fraction of each sample at a temperature below 0°, and a system of verification automatically controlling the foregoing components as a function of the signals emitted by the sensors.

The system for measuring of said invention is related to the saturation of the container, considerably limiting the precision of the system; in the same manner it is related with the storage of the samples, this being unfit for the object of the application. Moreover, the system lacks communications and a system permitting the processing of the data in an intelligent manner.

Another development is described in the patent CN101813793 disclosing a pluviometer of the digital control type, comprising a receiver for water, a test cylinder in communication with the receiver for water and a sensor disposed in the test cylinder utilized to measure the water level data, wherein the upper extremity of the sensor is connected with a reference test rod and is in connection with a pulley of a pull cord.

The system proposed in said invention lacks an exact measurement of the quantity of rain by virtue of the fact that the measurement depends upon rigid and fixed mechanical elements, limiting the range of operation and measurement. In the same manner, the system does not consider the heating of the sample to attain the appropriate temperature for the measurement.

The invention WO2013098437 relates to a pluviometer providing a measurement of the precipitations, wherein the components or parts of the pluviometer have been designed such as to maximally reduce the errors produced by meteorological factors, essentially the wind, and the errors produced by instrumental or operational factors, wherein the pluviometer comprises an upper rain collector, receiving means of the rainwater collected in the collector and upon each emptying activating a device recording data of the intensity and quantity of water precipitated, a heating device, a lower measuring cylinder whereinto the receiving means empty, a lower storage vessel for the water collected, and a support structure possessing level positioning.

By virtue of the functioning principle of said system, it requires an operator to take the measurement as a function of the level shown in a test cylinder. Furthermore, the system is not automatic, it is not intelligent, and it presents no possibilities of calibration, by virtue whereof it is not exact.

CN101776775 A discloses a pluviometer comprising a funnel, heating means, a bottle, an ultrasound level sensor and a controlling device to activate the heating means only when presence of an object in the funnel is detected by a light sensor and when the ambient temperature is around 0°C.

CN202126510 U discloses a pluviometer comprising a funnel, an impurity filter, a U-shaped bottle with a drain hole and an ultrasound level sensor.

FR2770306 A1 discloses a pluviometer comprising a cylindrical receiving section with cylindrical heating means, a conical collecting section with conical heating means.

DE4231235 A1 discloses a pluviometer comprising a funnel, a U-shaped bottle and a capacitive or ultrasound level sensor.

In this respect, it is clear that it is necessary to develop new devices achieving the resolution of the technical problems related with the manner wherein the sample of rain or snow is collected, the processing to which the sample is subjected to ensure the precision of the measurement, and the utilization of different types of sensors permitting validation of the data obtained; furthermore, these instruments are of great assistance in aeronautical applications by virtue of the fact that they permit the obtainment of data on the conditions of rain in airports, for which purpose it is necessary to have available devices permitting the obtainment of data in real time without the requirement for anyone being present at the site whereat the measurement is taken.

Moreover, it is evident that there exists in the state of the art the need to design and implement a system or device for measuring rain which may be calibrated in conformity with the particular conditions of the site of operation and provided with artificial intelligence in order to optimize the functioning of the device and the quality of the measurement.

In this sense, one of the advantages of the present application stems from the fact that that the device referred to is capable of measuring any quantity of precipitation of rain or snow, by virtue of the fact that it does not utilize cumulative measurements as do the majority of conventional sensors of this type. Another advantage of the present invention stems from the use of a remote sensor and a flow sensor to calculate the volume of fluid collected. This measurement is stored over time to constitute a digital record of the behavior of the precipitation. Furthermore, the device of the present invention utilizes the principles of fluid mechanics to optimize the process of measurement.

In this respect, one of the novel contributions possessed by the system or device in conformity with the present invention is that it possesses an adaptive control module maintaining the temperature of the sample at an appropriate level, according to the site of operation, in order to ensure the quality of the measurement.

In effect, the present invention is of great importance by virtue of the fact that it permits substantial improvement of the measurement of the precipitation of water or snow, said measurement being of immense importance in aeronautical applications to improve the safety of operations of taking off and landing of aircraft.

In addition to the foregoing, the present invention renders a significant contribution to the state of the art by virtue of the fact that, disposing of a device capable of being adapted to the particular conditions of the zone, it ensures the quality of the measurement.

The function of the system in conformity with the present invention has as objective to measure and record the quantity of precipitation of rain or snow in an adaptive and intelligent manner.

### DESCRIPTION OF THE DRAWINGS

The invention may be better understood by means of the drawings wherein there are shown each of the elements comprising the device for measuring rain and snow, the protection whereof is desired. Furthermore, the drawings indicate the reference numbers assigned to the elements constituting said system.

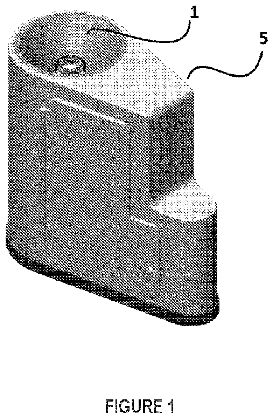

**Figure 1** corresponds to the external configuration of the system for measuring rain and snow in conformity with the present invention, wherein there is detailed a constitution of the modules comprising the system, these being a module for collecting water or snow (1) and the housing (5).

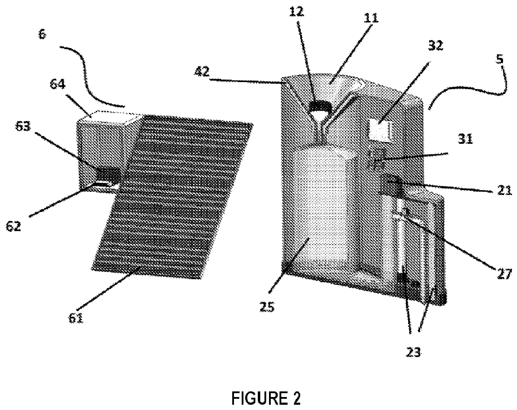

**Figure 2** corresponds to a cutaway view showing the internal configuration of the system or device for measuring rain and snow, wherein there are detailed a housing (5) and photovoltaic energy module (6), comprising a panel (61), a regulator (62), a battery (63), and an enclosure (64). The housing (5) possesses a funnel (11), an impurities filter (12), a laser sensor (21), laser sensors (23), a U-shaped bottle (25), flow sensor (27), embedded system (31), liquid crystal or LED touch screen (32), a conical support for the resistance (42).

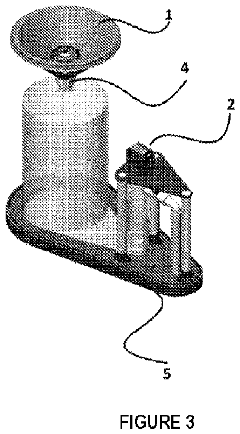

**Figure 3** corresponds to a view of the components within the housing (5) of the module for collecting water or snow (1), wherein there may be observed a module for measuring the level and volume of fluid (2), a heating module for collecting snow (4), and the base of the housing (5).

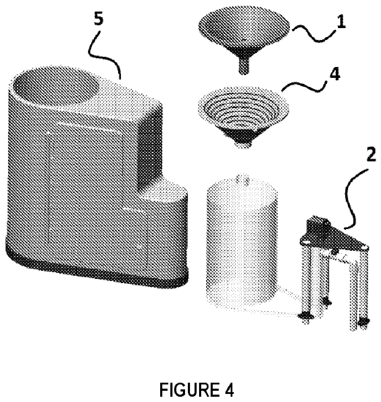

**Figure 4** corresponds to an exploded view of the module for collecting water or snow (1), a module for measuring the level and volume of fluid (2), a heating module for collecting snow (4), a housing (5).

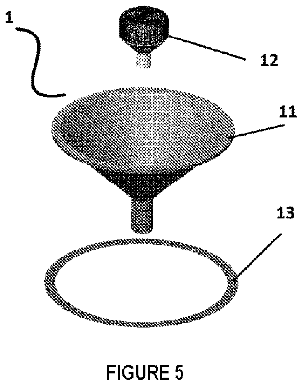

**Figure 5** corresponds to an exploded view of the module for collecting water or snow (1), comprising a funnel (11), an impurities filter (12) and a gasket (13).

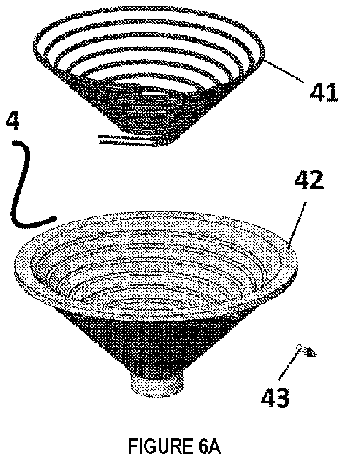

**Figure 6A** corresponds to an exploded view of the heating module for collecting snow (4) wherein the following elements are detailed: a conical resistance (41), a conical support for the resistance (42), a thermocouple temperature sensor (43).

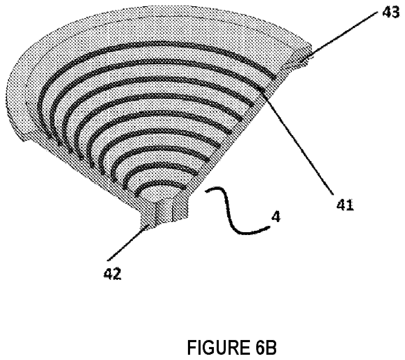

**Figure 6B** corresponds to a cutaway isometric view of the heating module for collecting snow (4), wherein the following elements are detailed: a conical resistance (41), a conical support for the resistance (42), a thermocouple temperature sensor (43).

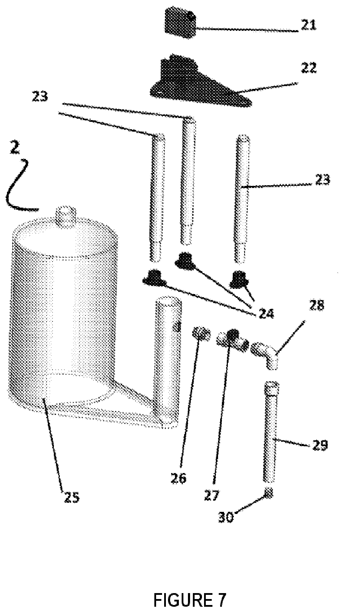

**Figure 7** corresponds to an exploded view of a module for measuring the level and volume of fluid (2), comprising a laser sensor (21), a laser sensor base (22), three supports for the laser sensor (23), three fixing rings for supports (24), a U-shaped bottle (25), a coupling for flow sensor (26), a flow sensor (27), a flow sensor outlet elbow (28), a drain tube (29), a protective filter for the drain (30).

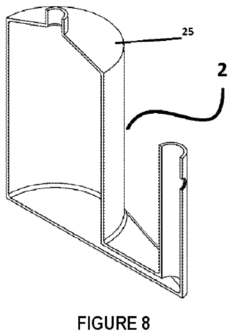

**Figure 8** corresponds to a cutaway view wherein there are detailed the orifice of the U-shaped bottle (25) of the module for measuring the level and volume of fluid (2).

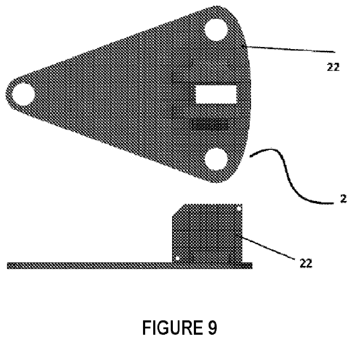

**Figure 9** corresponds to frontal and upper views of the laser sensor base (22).

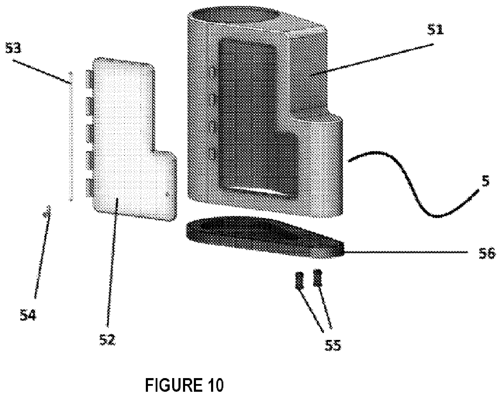

**Figure 10** corresponds to an exploded view of the housing (5), comprising a cover (51), a door (52), a pin (53) for the door (52), a locking device (54), two military connectors (55) and a base (56).

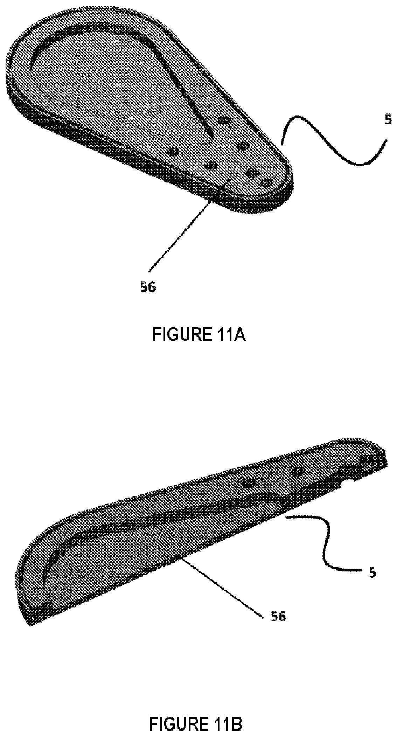

**Figure 11A** corresponds to a detailed view of the base (56) of the housing (5).
**Figure 11B** corresponds to a detailed longitudinal cutaway view of the base (56) of the housing (5).

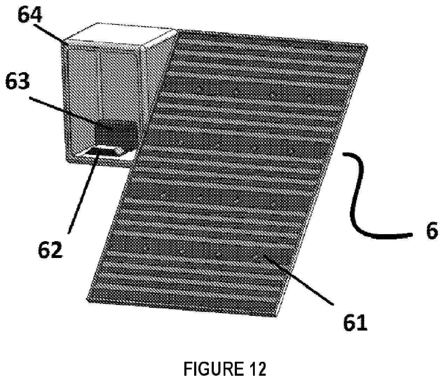

**Figure 12** corresponds to the photovoltaic energy module (6), comprising a panel (61), a regulator (62), a battery (63), and an enclosure (64).

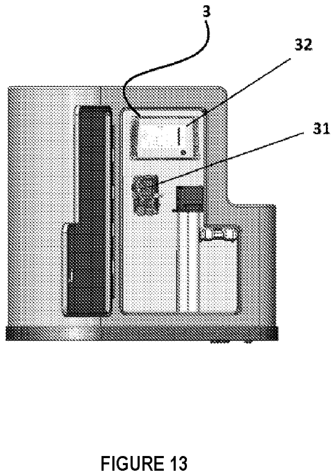

**Figure 13** corresponds to the data processing module (3), comprising an embedded system (31), a digital interface for display upon a liquid crystal or LED touch screen (32), an RS-232 communications interface and an Ethernet 10/100/1000 communications interface located within the embedded system (31).

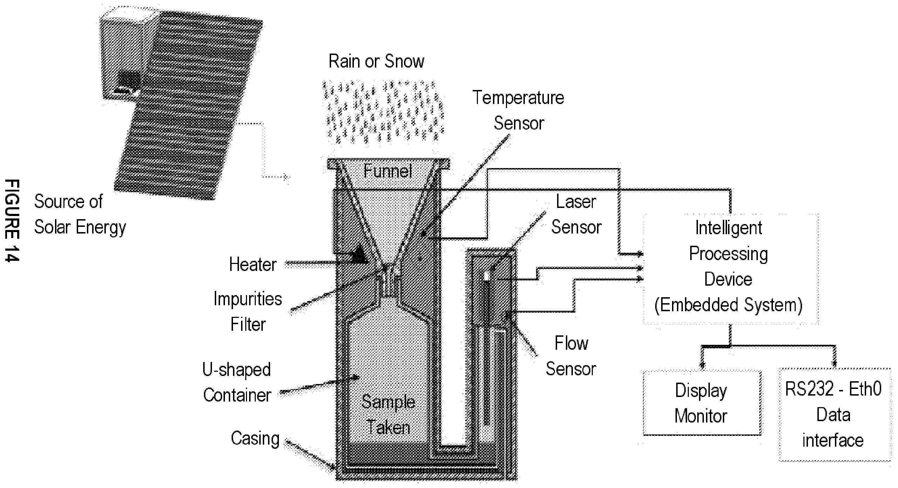

**Figure 14** corresponds to a functional diagram of the device for measuring rain precipitation and snow.

### DETAILED DESCRIPTION

The object of the present invention is to provide a system for measuring rain and snow, basically comprising:
- module for collecting water or snow (1), the module for measuring the level and volume of fluid (2), the data processing and handling module (3), the heating module for collecting snow (4), housing (5) and a photovoltaic energy module (6).
- A module for collecting water or snow (1), comprising a funnel (11), by means whereof the sample of rainwater is collected, an impurities filter (12) and a gasket (13) preventing water infiltrating within the interior of the housing (5).
- A module for measuring the level and volume of fluid (2), comprising a laser sensor (21) measuring the height attained by the liquid, a laser sensor base (22), wherein there is affixed the laser sensor, for such purpose having in the interior thereof a perforation, three supports for the laser sensor (23) supporting the base and having as objective the maintenance of the sensor at the height of the measuring tube, three fixing rings for supports (24), a U-shaped bottle (25), wherein the sample is collected, a coupling for flow sensor (26), a flow sensor (27), a flow sensor outlet elbow (28), a drain tube (29), a protective filter for the drain (30).
- A data processing module (3), comprising an embedded system (31) based upon the 32 bit processing architecture, possessing a power interface to control the heating module for collecting snow (4), a digital interface for display upon a liquid crystal or LED touch screen (32), an RS-232 communications interface, and an Ethernet 10/100/1000 communications interface.
- A heating module for collecting snow (4), containing a conical resistance (41), the purpose whereof is to provide the appropriate temperature for the sample in order that the liquid be at the triple point (being the phase wherein the water is at the maximum density thereof), a conical support for the resistance (42) of ceramic material, a thermocouple temperature sensor (43) to be used to regulate the temperature of the resistance such that, in this manner, the appropriate temperature is transmitted to the sample for the measurement.
- A housing (5), possessing a cover (51) to serve to isolate the electronic and control components of the system, a door (52) to permit access to the interior of the housing, a pin for the door (53), a locking device (54), two military connectors (55) for the RS-232, Ethernet and the supply voltage input connections, a base (56) possessing perforations appropriate for the support of the U-shaped bottle (25), the three fixing rings for supports (24) and the three supports for the laser sensor (23), a drain tube (29) and a protective filter for the drain (30).
- A photovoltaic energy module (6), comprising a panel (61), a regulator (62), a battery (63), and an NEMA standard enclosure of type 4x (64).

The device for measuring rain and snow, which must be located outdoors in the zone whereat it is desired to measure the precipitation, wherein the water or the snow falls into the metal funnel (11) capable of conducting the temperature (preferably of aluminum, stainless steel or a non-oxidizing metal), possessing an impurities filter (12) preventing solid agents such as contaminants or insects ingressing into the device, the funnel (11) in turn rests upon a rubber gasket (13) preventing the filtration of water toward the interior of the housing (5). The funnel (11) rests upon the conical resistance (41) and the conical support for the resistance (42), these being responsible for maintaining the temperature in the funnel (11) in order to ensure that the fluid ingressing is at the correct temperature, through an adaptive control system, having as input the measurement from the thermocouple temperature sensor (43); this control system is implemented within the data processing module (3). The working temperature of the system or device of the present invention lies between temperatures as low as -80°C up to temperatures of 40°C. An appropriate range is that wherein the temperature is equal to or exceeds 4°C (degrees Celsius), preferably between 4°C and 30°C, this being relevant during a cold season in order to bring the water to the triple point and, while during a hot season, it is considered that the ambient temperature of the location is adequate to measure the quantity of precipitation.

The U-shaped bottle (25) possesses two sections of different diameters joined by the bases thereof; the section of greater diameter is denominated inlet mouth, by virtue of the fact that it is through this section that the fluid is received, the section of lesser diameter being denominated outlet mouth, by virtue of the fact that in the case of heavy rain the fluid will be evacuated through same.

The fluid is directed towards the U-shaped bottle (25); by virtue of the geometry and the hydrostatic paradox the level of liquid will be at the same height in the inlet mouth and in the outlet mouth. In the upper part of the outlet mouth is positioned a laser sensor (21) measuring the height attained by the liquid; in the particular case wherein the maximum quantity of liquid contained in the U-shaped bottle (25) is exceeded, the measurement of the precipitation is realized considering solely the measurement of the flow performed by means of the flow sensor (27) located between the outlet mouth and the drain.

The laser sensors (21) and the flow sensor (27) are connected to a data processor (3) which calculates the equivalent volume of outflowing water, in this manner achieving that the device may collect and measure any level of water no matter how high it may be.

This device possesses a data processing module (3) provided with artificial intelligence, comprising an embedded system (31) calculating and displaying graphs and data corresponding to the measurements of precipitation. This module permits a user to locally interact with and configure the device through the liquid crystal or LED touch screen (32).

The data processing module (3) possesses two communications interfaces, one RS-232 interface and one Ethernet interface, connected to the military connectors (55), permitting that the data measured may be transmitted to a remote location, rendering the device accessible.

The device for measuring rain and snow incorporates a photovoltaic energy module (6), by virtue whereof it may be installed in remote locations without complications of electrical installation.

The housing (5) is preferably manufactured from a thermosetting compound polymeric material, rendering it resistant to corrosion caused by changing climatic conditions. Each of the modules of the device are described below.

The present invention furthermore makes reference to the use of the system or device to measure any quantity of precipitation of rain or of snow.

Additionally, the present invention makes reference to the use of the system or device to measure the volume of fluid collected over time for the purpose of digitally recording the behavior of a precipitation.

Furthermore, the present invention concerns the use of the system or device to measure the precipitation of water or snow for aeronautical applications.

## Claims

1. A system for measuring rain and snow comprising:
• a module for collecting water or snow (1),
• a module for measuring the level and volume of fluid (2),
• a data processing and handling module (3),
• a heating module for collecting snow (4),
• a housing (5) and a photovoltaic energy module (6),
wherein the module for collecting water or snow (1) comprises a funnel (11), an impurities filter (12) and a gasket (13), and the module for measuring the level and volume of fluid (2) comprises a laser sensor (21), a laser sensor base (22), three supports (23) for the laser sensor (21), three fixing rings (24) for supports, a U-shaped bottle (25), a coupling for flow sensor (26), a flow sensor (27), a flow sensor outlet elbow (28), a drain tube (29) and a protective filter for the drain (30), and the data processing module (3) comprises an embedded system (31), a digital interface (32), an RS-232 communications interface, and an Ethernet 10/100/1000 communications interface,
wherein the heating module for collecting snow (4) is responsible for maintaining the temperature in the funnel (11) at an appropriate level through an adaptive control implemented with the data processing module (3), so that:
during a hot season, precipitation measurement is performed at ambient temperature, and during a cold season, the heating module (4) heats water or snow in the funnel (11) to a temperature greater than or equal to 4°C in order to bring the water to the triple point.

2. The system for measuring rain and snow as claimed in claim 1, **characterized in that** it comprises a heating module (4) for collecting snow containing a conical resistance (41), a conical support (42) of ceramic material for the resistance and a thermocouple temperature sensor (43).

3. The system for measuring rain and snow as claimed in claims 1 and 2, **characterized in that** the housing (5) possesses a cover (51), a door (52), a pin (53) for the door (52), a locking device (54), two military connectors (55), a base (56), a drain tube (29) and a protective filter for the drain (30).

4. The system for measuring rain and snow as claimed in claim 3, **characterized in that** the base (56) posesses perforations for the support of the U-shaped bottle (25), the three fixing rings (24) for supports and the three supports (23) for the laser sensor (21).

5. The system for measuring rain and snow as claimed in any of the foregoing claims, **characterized in that** the photovoltaic energy module (6) comprises a panel (61), a regulator (62), a battery (63) and an NEMA standard enclosure of type 4x (64).

6. The use of the system as defined in the foregoing claims to measure precipitation of rain or of snow.

7. The use of the system as defined in claims 1 to 5 to measure the volume of fluid collected over time for the purpose of digitally recording the behavior of a precipitation.

8. The use of the system as defined in claims 1 to 5 to measure the precipitation of water or snow for aeronautical applications.

## Patentansprüche

1. System zum Messen von Regen und Schnee, umfassend:
• ein Modul zum Auffangen von Wasser oder Schnee (1),
• ein Modul zum Messen des Flüssigkeitsfüllstands und -volumens (2),
• ein Datenverarbeitungs- und Datenhandhabungsmodul (3),
• ein Heizmodul zum Auffangen von Schnee (4),
• ein Gehäuse (5) und ein Photovoltaik-Energiemodul (6),
wobei das Modul zum Auffangen von Wasser oder Schnee (1) einen Trichter (11), einen Fremdstofffilter (12) und eine Dichtung (13) umfasst, das Modul zum Messen des Flüssigkeitsfüllstands und -volumens (2) einen Lasersensor (21), eine Lasersensoraufnahme (22), drei Halterungen (23) für den Lasersensor (21), drei Befestigungsringe (24) für Halterungen, eine U-förmige Flasche (25), eine Anschlussvorrichtung für einen Strömungssensor (26), einen Strömungssensor (27), einen Strömungssensor-Ausgangskrümmer (28), ein Ablaufrohr (29) und einen Schutzfilter für den Ablauf (30) umfasst, und das Datenverarbeitungsmodul (3) ein Embedded-System (31), eine digitale Schnittstelle (32), eine RS-232-Kommunikationsschnittstelle und eine Ethernet 10/100/1000 Kommunikationsschnittstelle umfasst,
wobei das Heizmodul zum Auffangen von Schnee (4) dafür zuständig ist, die Temperatur im Trichter (11) durch eine mit dem Datenverarbeitungsmodul (3) eingesetzte adaptive Steuerung auf einem geeigneten Niveau zu halten, sodass:
während einer heißen Jahreszeit die Niederschlagsmessung bei Umgebungstemperatur erfolgt und
während einer kalten Jahreszeit das Heizmodul (4) Wasser oder Schnee im Trichter (11) auf eine Temperatur oberhalb oder gleich 4°C erwärmt, um das Wasser auf den Tripelpunkt zu bringen.

2. System zum Messen von Regen und Schnee nach Anspruch 1, **dadurch gekennzeichnet, dass** es ein Heizmodul (4) zum Auffangen von Schnee umfassend einen konischen Widerstand (41), eine konische Aufnahme (42) aus Keramikmaterial für den Widerstand und einen Thermoelement-Temperaturfühler (43) umfasst.

3. System zum Messen von Regen und Schnee nach den Ansprüchen 1 und 2, **dadurch gekennzeichnet, dass** das Gehäuse (5) eine Abdeckung (51), eine Tür (52), einen Stift (53) für die Tür (52), eine Verriegelungsvorrichtung (54), zwei Militär-Steckverbinder (55), ein Unterteil (56), ein Ablaufrohr (29) und einen Schutzfilter für den Ablauf (30) aufweist.

4. System zur Messung von Regen und Schnee nach Anspruch 3, **dadurch gekennzeichnet, dass** das Unterteil (56) Perforationen zur Aufnahme der U-förmigen Flasche (25), der drei Befestigungsringe (24) für Halterungen und der drei Halterungen (23) für den Lasersensor (21) aufweist.

5. System zum Messen von Regen und Schnee nach einem der vorstehenden Ansprüche, **dadurch gekennzeichnet, dass** das Photovoltaik-Energiemodul (6) ein Panel (61), einen Regler (62), eine Batterie (63) und ein Gehäuse nach NEMA-Norm vom Typ 4x (64) umfasst.

6. Verwendung des Systems nach den vorstehenden Ansprüchen zum Messen von Niederschlägen in Form von Regen oder Schnee.

7. Verwendung des Systems nach den Ansprüchen 1 bis 5 zum Messen des Volumens der im Laufe der Zeit gesammelten Flüssigkeit zwecks digitaler Aufzeichnung des Niederschlagsverhaltens.

8. Verwendung des Systems nach den Ansprüchen 1 bis 5 zum Messen von Niederschlägen in Form von Regen oder Schnee für luftfahrttechnische Anwendungen.

## Revendications

1. Système de mesure de la pluie et de la neige comprenant :
• un module pour collecter de l'eau ou de la neige (1),
• un module pour mesurer le niveau et le volume de fluide (2),
• un module de traitement et de manipulation de données (3),
• un module de chauffage pour collecter la neige (4),
• un logement (5) et un module d'énergie photovoltaïque (6),
dans lequel le module pour collecter de l'eau ou de la neige (1) comprend un entonnoir (11), un filtre d'impuretés (12) et un joint (13), et le module pour mesurer le niveau et le volume de fluide (2) comprend un capteur laser (21), une base de capteur laser (22), trois supports (23) pour le capteur laser (21), trois anneaux de fixation (24) pour les supports, une bouteille en forme de U (25), un raccord pour un capteur de débit (26), un capteur de débit (27), un coude de sortie de capteur de débit (28), un tube de drainage (29) et un filtre de protection pour le drain (30), et le module de traitement de données (3) comprend un système intégré (31), une interface numérique (32), une interface de communications RS-232 et une interface de communications Ethernet 10/100/1000,
dans lequel le module de chauffage pour collecter la neige (4) est responsable du maintien de la température dans l'entonnoir (11) à un niveau approprié par une commande adaptative réalisée avec le module de traitement de données (3), de sorte que :
pendant une saison chaude, la mesure des précipitations est effectuée à la température ambiante, et
pendant une saison froide, le module de chauffage (4) chauffe l'eau ou la neige dans l'entonnoir (11) à une température supérieure ou égale à 4°C afin de porter l'eau au point triple.

2. Système de mesure de la pluie et de la neige selon la revendication 1, **caractérisé en ce qu'**il comprend un module de chauffage (4) pour collecter la neige contenant une résistance conique (41), un support conique (42) en matériau céramique pour la résistance et un capteur thermocouple de température (43).

3. Système de mesure de la pluie et de la neige selon les revendications 1 et 2, **caractérisé en ce que** le logement (5) comporte un couvercle (51), une porte (52), une goupille (53) pour la porte (52), un dispositif de verrouillage (54), deux connecteurs militaires (55), une base (56), un tube de drainage (29) et un filtre protecteur pour le drain (30).

4. Système de mesure de la pluie et de la neige selon la revendication 3, **caractérisé en ce que** la base (56) présente des perforations pour le support de la bouteille en forme de U (25), les trois anneaux de fixation (24) pour les supports et les trois supports (23) pour le capteur laser (21).

5. Système de mesure de la pluie et de la neige selon l'une quelconque des revendications précédentes, **caractérisé en ce que** le module d'énergie photovoltaïque (6) comprend un panneau (61), un régulateur (62), une batterie (63) et une enceinte standard NEMA du type 4x (64).

6. Utilisation du système tel que défini dans les revendications précédentes pour mesurer les précipitations de pluie ou de neige.

7. Utilisation du système tel que défini dans les revendications 1 à 5 pour mesurer le volume de fluide recueilli au fil du temps afin d'enregistrer numériquement le comportement d'une précipitation.

8. Utilisation du système tel que défini dans les revendications 1 à 5 pour mesurer les précipitations d'eau ou de neige pour des applications aéronautiques.
